(19)

Europäisches
Patentamt
European
Patent Office
Office européen
des brevets

(11) **EP 1 961 583 A1**

(12) **EUROPEAN PATENT APPLICATION**

(43) Date of publication:
   **27.08.2008 Bulletin 2008/35**

(51) Int Cl.:
   **B60B 21/02** (2006.01)   **B60B 21/12** (2006.01)
   **B60C 19/00** (2006.01)

(21) Application number: **08250302.0**

(22) Date of filing: **24.01.2008**

(84) Designated Contracting States:
   **AT BE BG CH CY CZ DE DK EE ES FI FR GB GR HR HU IE IS IT LI LT LU LV MC MT NL NO PL PT RO SE SI SK TR**
   Designated Extension States:
   **AL BA MK RS**

(30) Priority: **25.01.2007 JP 2007015677**
   **16.02.2007 JP 2007036364**

(71) Applicants:
   • **Asahi Tec Corporation**
    **Kikugawa-shi**
    **Shizuoka-prefecture, 439-8651 (JP)**
   • **Bridgestone Corporation**
    **Tokyo 104-8430 (JP)**

(72) Inventors:
   • **Kusaka, Shunsuke**
    **Shizuoka 439-8651 (JP)**
   • **Yamamoto, Masami**
    **Shizuoka 439-8651 (JP)**

   • **Michisaka, Hideki**
    **Shizuoka 439-8651 (JP)**
   • **Kubota, Yoshifumi**
    **Shizuoka 439-8651 (JP)**
   • **Takahata, Katsuyoshi**
    **Shizuoka 439-8651 (JP)**
   • **Katai, Shinya**
    **Shizuoka 439-8651 (JP)**
   • **Yamaguchi, Tomoyasu**
    **Shizuoka 439-8651 (JP)**
   • **Murase, Masanori**
    **Tokyo 187-8531 (JP)**
   • **Ishida, Masami**
    **Tokyo 187-8531 (JP)**
   • **Kawamata, Satoru**
    **Tokyo 187-8531 (JP)**

(74) Representative: **Paget, Hugh Charles Edward et al**
   **Mewburn Ellis LLP**
   **York House**
   **23 Kingsway**
   **London WC2B 6HP (GB)**

(54) **Vehicle wheel and manufacturing method of the same**

(57)    Provided are a vehicle wheel which can ensure high driveability and can restrain transmission of vibration to a vehicle so as to offer satisfactory drive comfortability and to reduce in-car noise, and which can enhance the productivity and the facility of formation during production, as possible as it can, and a method of manufacturing the vehicle wheel. In the vehicle wheel 1 annually incorporating a plurality of subsidiary air chambers 3 on a rim outer peripheral surface 4, a cover member 13 having a lug part extended over the entire periphery and a stepped part extended over its periphery along the inside of the lug part 16, and a bottom plate member 14 are superimposed with each other through a seal member made of an elastic member and interposed therebetween in an airtight manner, and the cover member 13 and the rim outer peripheral surface 4 are joined to each other in a joint part 10 where the cover member 13 and the rim outer peripheral surface 4 are made into contact with each other so as to form a subsidiary air chamber 3 having air-tightness.

EP 1 961 583 A1

**Description**

[Technical Field]

The present invention relates to a vehicle wheel which wears thereon with a tire, and a manufacturing method of the same, and in particular to a vehicle wheel which is capable of ensuring a high driveability while restraining vibration from being transmitted to a vehicle, and which can enhance the drive comfortability and can reduce in-car noise while it can be manufactured with a high degree of productivity, which can reduce failures caused by a weld defect and which can be easily manufactured, and to a manufacturing method of the same.

[Background Art]

These years, for automobiles, and in particular, for the so-called luxury cars, there have been demanded both driveability and comfortability of in-car space. Thus, for example, an active control technology for a suspension, an improving technology for a vibration proof rubber and a tire structure have been developed as to the so-called underbody including tires, vehicle wheels, suspensions and the like.

Various improvements have been made for vehicle wheels. For example, in order to restrain the cavity resonance of a tire which mainly causes in-car noise, there is disclosed a vehicle wheel or the like, in which a rim wheel is formed therein with subsidiary air chambers which are communicated with a main air chamber in a tire through the communication holes having an adjusted size so as to serve as a Helmholtz resonant absorber (refer to, for example, Patent Document 1 and Patent Document 2).

For example, a rim wheel disclosed in the Patent Document 1 incorporates a plurality of subsidiary air chambers which are defined between the rim and a plurality of cover members arranged radially outside of the rim, and which are divided by a plurality of partitions circumferentially spaced from each other, concave well parts formed in at least one of the rim and the cover members and each having a·bottom position which is located radially inside of the bead seat, and communication parts for communicating the main air chamber of the tire with the subsidiary air chambers. The subsidiary air chambers and the communication parts constitute the Helmholtz resonant absorbers.

Further, a rim wheel disclosed in the Patent Document 2 is a vehicle wheel provided with subsidiary air chambers defined by a plurality of subsidiary air chamber forming members which are circumferentially arranged so as to form the subsidiary air chambers at the outer peripheral surface of the rim, each of the subsidiary air chamber forming member being composed of a subsidiary air chamber forming part for defining a subsidiary air chamber between itself and the outer peripheral surface of the rim, a communication part for communicating the subsidiary air chamber with a tire main air chamber defined between a tire and the rim, and a lug part formed on a joint part between the subsidiary air chamber and the rim, and the subsidiary air chamber forming member being secured to a well part in the outer peripheral surface of the rim through the lug part in an airtight manner so as to define a subsidiary air chamber.

[Patent Document 1] JP-A 2002-79802
[Patent Document 2] JP-A 2004-291896

However, as to the rim wheel disclosed in the Patent Document 1, the cover member and the partition constituting the subsidiary air chamber are joined to each other by welding or the like, resulting in occurrence of such a problem that it is difficult to ensure a mechanical strength which is durable against vibration during running of a vehicle, for the thus joined part. Further, it is necessary for ensuring a sufficient resonant absorption effect in the case of joining the cover member with the partition by welding to ensure an air-tightness for the subsidiary air chamber, and accordingly, extremely high welding technique is required. Thus, there has been raised such a problem that the rim wheel disclosed in the Patent Document 1 can hardly be manufactured on an industrial production base.

However, the rim wheel disclosed in the Patent Document 2 is for a vehicle wheel which is circumferentially provided with a plurality of subsidiary air chamber forming members for constituting the subsidiary air chambers in the outer peripheral surface of the rim, each of the subsidiary air chamber forming member being composed of a subsidiary air chamber forming part for defining a subsidiary air chamber between itself and the outer peripheral surface of the rim, a communication part for communicating the subsidiary air chamber with a tire air chamber defined between a tire and the rim and a lug part formed on the subsidiary air chamber forming member in a joint part between itself and the rim, and the subsidiary air chamber forming member being fixed to a well part on the outer peripheral surface of the rim through the lug part in an air-tight manner so as to define a subsidiary air chamber. The joint part is subjected to welding in order to ensure a necessary mechanical strength, resulting in occurrence of the following problems is predicted.

That is, the heat by the welding causes the components thereof to deteriorate their material performances and to incur a structural distortion. Further, since the subsidiary air chamber forming member is fixed to the well part on the rim outer peripheral surface through the lug part in an air-tight manner, the distribution of a welding material along the entire periphery of the lug part along which the lug part is welded, can hardly be uniformed, and accordingly, the quantity of the welding material becomes larger at the beginning and ending points of the welding and so forth. It has to take account an additional weight by the welding material itself. As a result, the strength and the roundness of the rim wheel are lowered so as to cause a problem of deteriorating the wheel balancing, a problem of decreasing the noise absorbing effect due to lowering of the accuracy of the volume of the subsidiary air chamber. Thus, deterioration of working efficiency, an increase in the number of production process steps, an increase in the production costs and the like are inevitable in order to settle the above-mentioned problems.

[Disclosure of the Invention]

The present invention is developed in view of the above-mentioned problems, and accordingly, an object of the present invention is to provide a vehicle wheel which can ensure a high driveability while restrain vibration transmitted to a vehicle, which can offer improved drive comfortability while in-car noise can be reduced, and the productivity and the manufacturing facility can be improved as possible as it can with less defects due to welding or the like, and is also to provide a manufacturing method of the same.

The inventors in the present application have earnestly studied measures for solving the above-mentioned problems, and found that these problems can be eliminated by using the following configurations, thereby the present invention is proposed. Namely, the present invention has the following configurations:

[1] A vehicle wheel having a rim formed at an outer peripheral surface with subsidiary air chambers each of which is defined at least in part by a cover member having a peripheral part which ensures air-tightness so that the subsidiary air chamber has air-tightness.

[2] The vehicle wheel as set forth in item [1], wherein a plurality of the subsidiary air chambers are provided on the outer peripheral surface of the rim.

[3] The vehicle wheel as set forth in item [1] or [2], wherein the cover member has a lug part at least around the part, and the lug part of the cover member is joined to the outer peripheral surface of the rim in an air-tight manner in order to form a subsidiary air chamber having air-tightness on the outer peripheral surface of the rim.

[4] The vehicle wheel as set forth in item [1] or [2], wherein a seal member is interposed between the outer peripheral surface of the rim and the cover member.

[5] The vehicle wheel as set forth in item [3], wherein the cover member and the outer peripheral surface of the rim are superimposed with each other through a seal member made of an elastic material and interposed therebetween in an airtight manner, and the cover member and the outer peripheral surface of the rim are joined at a joint part where the cover member and the outer peripheral surface of the rim are made into contact with each other so as to form a subsidiary air chamber having air-tightness on the outer peripheral surface of the rim.

[6] The vehicle wheel as set forth in item [5], wherein the cover member has a lug part at least around a part of the periphery, and a stepped part extended over the entire periphery of the cover member along the inside thereof, and the cover member and the outer peripheral surface of the rim are superimposed with each other through of a seal member made of an elastic material in an air-tight manner and thereafter are joined to each other in a joint part where the cover member and the outer peripheral surface of the rim are made into contact with each other so as to form the subsidiary air chamber having air-tightness.

[7] The vehicle wheel as set forth in any one of items [1] to [3], wherein a bottom plate member is interposed between the cover member and the outer peripheral surface of the rim, and the cover member and the bottom member are joined to each other so as to form the subsidiary air chamber which is arranged on the outer peripheral surface of the rim.

[8] The vehicle wheel as set forth in item [7], wherein the cover member has a lug part at least around a part of the periphery, and the lug part and the bottom plate member are joined with each other in an air-tight manner so as form the subsidiary chamber having air-tightness on the outer peripheral surface of the rim.

[9] The vehicle wheel as set forth in item [8], wherein the cover member and the bottom plate member interposed between the cover member and the outer peripheral surface of the rim through a seal member, and thereafter the cover member and the outer peripheral surface of the rim are joined to each other in a joint part where the cove member and the outer peripheral surface of the rim are made into contact with each other so as to form a subsidiary air chamber having air-tightness.

[10] The vehicle wheel as set forth in item [9], wherein the cover member has a lug part at least around a part of the periphery, and a stepped part extended over the entire periphery thereof along the inside the cover member, and the cover member and the bottom plate member interposed between the cover member and the outer peripheral surface of the rim are superposed with each other in an airtight manner, through a seal member made of an elastic material and interposed therebetween, and then the cover member and the outer peripheral surface of the rim are joined to each other in a joint part where the cover member and the outer peripheral surface of the rim are made into contact with each

other so as to form a subsidiary air chamber having air-tightness.

[11] The vehicle wheel as set forth in any one of items [5], [6], [9] and [10], wherein the joint parts include at least a part of the lug, and are located at each of opposite ends of the cover member in the circumferential direction of the wheel.

[12] The vehicle wheel as set forth in any one of items [5], [6] and [9] to [11], wherein the joint part is located at an intermediate position of the cover member in the axial direction of the wheel.

[13] The vehicle wheel as set forth in any one of items [5], [6] and [9] to [12], wherein the joint part is located at the intermediate position of the outer peripheral surface of the rim in the axial direction of the wheel.

[14] The vehicle wheel as set forth in any one of items [5], [6] and [9] to [13], wherein the joint parts are located only at two positions which are at peripherally opposite ends of the cover member.

[15] The vehicle wheel as set forth in any one of items [5], [6] and [9] to [14], wherein the joint part is formed in a plastic flow zone between the cover member and the outer peripheral surface of the rim, and has a circular sectional shape recess having a depth which is not less than the thickness of the cover member.

[16] The vehicle wheel as set forth in item [1] or [2], wherein, after a lower cover member is annularly joined to the outer peripheral surface of the rim in a joint part of the lower cover member, a cover member and the lower cover member joined to the outer peripheral surface of the rim are superimposed with each other, and thereafter, the cover member and the lower cover member are joined with each other in an air-tight manner at the superimposed position by calking or seam-welding so as to form a subsidiary air chamber.

[17] The vehicle wheel as set forth in item [16], wherein joint parts of the lower cover member are located at least at two positions which are near the opposite ends of the lower member in the circumferential direction of the wheel.

[18] The vehicle wheel as set in item [1] or [2], wherein a cover member and a lower cover member which have been superimposed to each other, are joined to each other in an air-tight manner at superposed positions by calking or seam-welding so as to form a subsidiary air chamber member, and thereafter, the cover member formed as the subsidiary air chamber member is joined to the outer peripheral surface of the rim in the joint part of the cover member so as to secure the subsidiary air chamber member onto the outer peripheral surface of the rim in order to form a subsidiary air chamber.

[19] The vehicle wheel as set forth in item [18], wherein the joint parts of the cover member are located at least at two positions which are near the opposite ends of the cover member in the circumferential direction of the wheel.

[20] The vehicle wheel as set forth in any one of items [1] to [19], wherein the subsidiary air chamber is formed therein with not less than one of communication holes which are communicated with the outer surface on the tire wearing side, and accordingly, the tire main air chamber and the subsidiary air chamber cooperate with each other through the communication holes so as to enable resonant absorption.

[21] A method of manufacturing a vehicle wheel annularly incorporating subsidiary air chambers on the outer peripheral surface of a rim, wherein a cover member having a lug part at least around the part of the periphery and the outer peripheral surface of the rim are superimposed with each other through a seal member made of an elastic material and interposed therebetween in an airtight manner, and thereafter are joined with each other in a joint part where the lug part and the outer peripheral surface of the rim are made into contact with each other so as to form the subsidiary air chamber having air-tightness on the outer peripheral surface of the rim.

[22] The method of manufacturing a vehicle wheel as set forth in item [21], wherein the cover member has a lug part at least around the part of the periphery, and a stepped part extended over the entire periphery along the inside of the cover member, and the cover member and the outer peripheral surface of the rim are superimposed with each other through the seal member made of an elastic material and interposed therebetween in an airtight manner, inside of the stepped part, and thereafter, are joined to each other in a joint part where the lug part and the outer peripheral surface of the rim are made into contact with each other so as to form the subsidiary air chamber having air-tightness on the outer peripheral surface of the rim.

[23] The method of manufacturing a vehicle wheel annularly incorporating subsidiary air chambers on the outer peripheral surface of a rim, wherein a cover member having a lug part at least around the part of the periphery and a bottom plate member interposed between the cover member and the outer peripheral surface of the rim are superimposed with each other through a seal member made of an elastic material and interposed therebetween in an airtight manner, and are then joined to each other in a joint part where the lug part and the outer peripheral surface of the rim are made into contact with each other so as to form a subsidiary air chamber having air-tightness on the outer peripheral surface of the rim.

[24] The method of manufacturing a vehicle wheel as set forth in item [23], wherein the cover member has a lug part at least around the part of the periphery and a stepped part extended over the entire periphery along the inside of the cover member, and the cover member and the bottom plate member interposed between the cover member and the outer peripheral surface of the rim are superimposed with each other through the seal member made of an elastic material and interposed therebetween in an airtight manner, inside of the stepped part, and are then joined to each other in a joint part where the lug part and the outer peripheral surface of the rim are made into contact with each other so as to form a subsidiary air chamber having air-tightness on the outer peripheral surface of the rim.

[25] The method of manufacturing a vehicle wheel as set forth in any of item [21] to [24], wherein the joint parts include at least a part of the lug part, and are located at opposite ends of the cover member in the circumferential direction of the wheel.

[26] The method of manufacturing a vehicle wheel as set forth in any one of item [21] to [25], wherein the joint part is located at the intermediate position of the cover member in the axial direction of the wheel.

[27] The method of manufacturing a vehicle wheel as set forth in any one of items [21] to [26], wherein the joint part is located at the intermediate position of the outer periphery of the rim in the axial direction of the wheel.

[28] The method of manufacturing a vehicle wheel as set forth in any one of items [21] to [27], wherein the joint parts are located only at two positions which are at circumferential opposite ends of the cover member.

[29] The method of manufacturing a vehicle wheel as set forth in any one of items [21] to [28], wherein the joining is carried out with the use of a joint tool composed of a substantially columnar rotary body having at a tip portion a protrusion projected along the axis of the rotary body and an annular ridge around the protrusion, in such a manner that the rotary body on rotation is pressed against the cover member so as to generate a frictional heat with which a plastic flow zone is formed between the cover member and the outer peripheral surface of the rim in the joint part, the plastic flow zone being stirred by the protrusion and the ridge of the joint tool which is thereafter pulled out along the axis of the rotary body, and thereafter, the plastic flow zone is cooled so as to be solidified.

According to items [1] to [3], [4], [7] and [8], the subsidiary air chambers are formed on the periphery of the wheel so as to exhibit a high sound absorbing effect. only one subsidiary air chamber is formed, an air sound absorbing effect can be expected.

According to items [1] to [3], [4], [7] and [8], the cover member is preferably provided at its periphery with the lug part in order to join the outer peripheral surface of the rim and the cover member to each other. However, it is not always necessary to provide the cover member with the lug part, but the cover member may be welded at the periphery to the outer peripheral part of the rim.

According to items [1] to [3], [4], [7] and [8], the seal member is preferably interposed between the cover member and the outer peripheral surface of the rim in order to allow the seal member to ensure air-tightness.

According to the configuration of item [16] in which after the lower cover member is annularly joined to the outer peripheral surface of the rim in the joint part of the lower cover member, the cover member and the lower cover member joined onto the outer peripheral surface of the rim are superimposed with each other, and are joined to each other in an airtight manner by calking or seam-welding in the part where they are superimposed with each other, so as to form the subsidiary air chamber, the air-tightness can be easily ensured for the subsidiary air chamber, and further, the subsidiary air chamber can be secured on the outer peripheral surface of the rim with a sufficient strength.

Further, since it is sufficient to fix only the lower cover member onto the outer peripheral surface of the rim, the flexibility of selection among joining methods can be increased for joining in the joint part and as well, the working efficiency can be enhanced while the costs incurred by the joining can be reduced. Further, deterioration of the material quality of the rim wheel caused by the welding and adverse effects upon the roundness can be restrained.

According to the configuration of item [17] in which the joint parts are located at least at two positions near the opposite ends of the lower cover member in the circumferential direction of the wheel, the working efficiency can be enhanced, and the costs incurred by the joining can be reduced. Further, deterioration of the material quality of the rim wheel caused by the welding and adverse effects upon the roundness can be restrained.

According to the configuration of item [18] in which the cover member and the lower cover member are superimposed with each other and are joined to each other in an airtight manner by calking or seam-welding in the position where they are superimposed with each other so as to form the subsidiary air chamber member, and thereafter, the cover member formed as the subsidiary air chamber member is joined and secured to the outer peripheral surface of the rim in the joint part of the cover member so as to form the subsidiary air chamber, air-tightness can be easily ensured for the subsidiary air chamber, and further, the subsidiary air chamber can be secured onto the outer peripheral surface of the rim with a sufficient strength.

Further, since it is sufficient to secure only the cover member onto the outer peripheral surface of the rim, the flexibility of selection among joining methods can be increased for joining in the joint part and as well, the working efficiency can be enhanced while the costs incurred by the joining can be reduced. Further, deterioration of the material quality of the rim wheel caused by the welding and adverse effects upon the roundness can be restrained.

According to the configuration of item [19] in which the joint parts are located at least at two positions which are near the opposite ends of the cover member in the circumferential direction of the wheel, the working efficiency can be enhanced while the costs incurred by the joining can be reduced. Further, deterioration of the material quality of the rim wheel caused by the welding and adverse effects upon the roundness can be restrained.

According to the configuration of item [16] or [18], there can be avoided the following problems: In general, it is difficult to carry out such a method that a structure, for example, the subsidiary air chamber which is internally hollow, and which is closed, is formed on the outer peripheral surface of the rim by superimposing two different members with each other in an air-tight manner at the same time with a sufficient strength. That is, in the case of the calking, it is required to clamp the two members at their joining positions with the use of a calking jig, and in the case of the seal-welding, it is required to clamp the two members mainly made of metal at their joining positions, on both sides with disc-like special jigs which also serve as electrodes, so as to carry out resistance welding by rotating the jigs over the entire periphery of the joint part while the two members are pressed and electrically energized. And accordingly, a space for clamping the two members with the jigs is required.

However, with the use of the configuration of item [16] or [18], two members which are superimposed with each other can be easily joined to each other in an airtight manner so as to form a structure which is hollow and which is closed, such as the above-mentioned subsidiary air chamber. Further, not only the above-mentioned structure can be easily formed and secured on the outer surface of the rim with a sufficient strength, but also a mass production can be introduced in order to expect reduction of the costs. Meanwhile, it also contribute to minimization of complicated manufacturing steps and reduction of the proportion defective.

According to item [16] to [19], a high driveability is ensured while vibration transmitted to a vehicle is reduced, thereby it is possible to materialize the reduction of in-car noise, to reduce failures caused by, for example, weld defect, to expect enhancement of working efficiency and reduction of manufacturing costs, and as well to ensure sealing without using a sealant. Thus, the necessity of working for separate collection can be eliminated, and accordingly, vehicle wheels which are excellent in ecology can be manufactured with a high degree of productivity.

According to item [21] in which the cover member having the lug part extended over the entire periphery is superimposed on the outer peripheral surface of the rim in an airtight manner through the seal member made of an elastic material and interposed therebetween, and is joined to the outer peripheral surface of the rim in the joint part in which the lug part and the outer surface of the rim are joined, so as to form a subsidiary air chamber having air-tightness on the outer peripheral surface of the rim, the subsidiary air chamber can be simply formed on not only a two-piece type wheel but also an integral cast wheel. Thus, it is possible to eliminate the necessity of welding and screwing during formation of a rim.

Further, since the cover member and the outer peripheral surface of the rim are superimposed with each other through the sealing member interposed therebetween in an airtight manner so as to ensure air-tightness, welding along the entire periphery of the cover member for ensuring air-tightness, joining such as screwing and the like are not required, thereby it is possible to reduce the working man-hours. Further, since less welding or the like is used, it is possible to avoid problems caused by the above-mentioned welding.

According to item [22], the cover member having the lug part extended over the entire periphery and the stepped part extended over the entire periphery along the inside of the lug part, and the outer peripheral surface of the rim are superimposed with each other through the seal member made of an elastic material and interposed therebetween inside of the stepped part in an airtight manner, and thereafter, they are joined to each other in the joint part where the lug part and the outer peripheral surface of the rim are made into contact with each other so as to form the subsidiary air chamber on the outer surface of the rim having air-tightness. Accordingly, since the seal member made of an elastic material can be set within the stepped part, the thickness of the seal member can be increased, and accordingly, the air-tightness can be easily ensured. Further, the flexibility of selecting an elastic material used for the seal member can be increased.

According to item [23], the cover member having the lug part extended over the entire periphery, and the bottom plate member are superimposed with each other through the seal member made of an elastic material and interposed therebetween in an airtight manner, and thereafter are joined to each other in the joint part where the lug part is made into contact with the outer peripheral surface so as to form a subsidiary air chamber having air-tightness on the outer peripheral surface of the rim. Accordingly, the cover member and the bottom plate member are joined to each other already having air-tightness, thereby it is possible to enhance the workability.

According to item [29], the joining is carried out in such a way that with the use of a joint jig having the protrusion projected from the tip portion of a column-like rotary body along the axis of the rotary body, and the annular ridge around the protrusion, the rotary body on rotation is pressed against the cover member in the joint part so as to generate a frictional heat with which a plastic flow zone is formed between the cover member and the outer peripheral surface of the rim within the joint part, and after the plastic flow zone is stirred by the protrusion and the ridge, the rotary body is pulled out along the axis of the rotary body so as to cool and solidify the plastic flow zone. Thus, they are joined together in the solid phase in comparison with welding which inevitably fuse a metal, and accordingly, a required heat capacity can be decreased. Thereby it is possible to eliminate the necessity of components such as screws or the like which exhibit adverse effects for rotational balancing. Further, the above-mentioned various problems caused by the welding can be eliminated substantially.

According to the present invention, high driveability can be ensured while vibration can be restrained from being transmitted to the vehicle, thereby it is possible to enhance the drive comfortability, and to reduce in-car noise. Thus, the vehicle wheel which can reduce failures caused by weld defects can be manufactured with a high degree of productivity.

**EP 1 961 583 A1**

[Brief Description of the Drawings]

[Fig. 1] Fig. 1 is a plane view schematically illustrating a vehicle wheel according to the present invention.

[Fig. 2] Fig. 2 is a sectional view schematically illustrating a vehicle wheel according to the present invention.

[Fig. 3] Fig. 3 is a schematic sectional view illustrating a method of joining a cover member.

[Fig. 4] Fig. 4 is a schematic sectional view illustrating a method of joining a cover member having a stepped part.

[Fig. 5] Fig. 5 is a schematic sectional view illustrating a method of joining a cover member with the use of a bottom plate member.

[Fig. 6] Fig. 6 is a schematic sectional view illustrating a method of joining a cover member having a stepped part with the use of a bottom plate member.

[Fig. 7] Fig. 7 is a schematic perspective view illustrating the tip portion of a rotary body.

[Fig. 8] Fig. 8 is a schematic sectional view for explaining a joining method with the use of a rotary body.

[Fig. 9] Fig. 9 is a view for explaining positions of joint parts in a cover member.

[Fig. 10] Fig. 10 is an explanatory view which shows positions of joint parts on the outer peripheral surface of a rim.

[Fig. 11] Fig. 11 is a sectional view illustrating a joint part between a cover member and the outer peripheral surface of a rim.

[Fig. 12] Fig. 12 is a explanatory view illustrating a condition in which two adjacent cover members are joined to each other in a single'joint part.

[Fig. 13] Fig. 13 is an explanatory sectional view illustrating a vehicle wheel around the outer peripheral surface of the rim thereof, for explaining a mechanism for preventing a cover member from shifting in the axial direction of the wheel on the outer surface of the rim and for ensuring air-tightness.

[Fig. 14] Fig. 14 is a schematic enlarged view illustrating a broken line part A in Fig. 14, for explaining a mechanism for preventing a cover member from shifting in the axial direction of the wheel on the outer surface of the rim and for ensuring air-tightness.

[Fig. 15] Fig. 15 is a schematic plan view illustrating another example of a shape of a stepped part of a cover member.

[Fig. 16] Fig. 16 is a plan view schematically illustrating a vehicle wheel in another embodiment.

[Fig. 17] Fig. 17 is a plan view schematically illustrating a vehicle wheel in another embodiment.

[Fig. 18] Fig. 18 is a perspective view schematically illustrating a subsidiary air chamber member.

[Fig. 19] Fig. 19 is a sectional view schematically illustrating a cover member and a lower cover member secured on the outer peripheral surface of a rim.

[Fig. 20] Fig. 20 is a sectional view for explaining a condition in which a cover member and a lower cover member secured to the outer peripheral surface of a rim are joined by calking.

[Fig. 21] Fig. 21 is a sectional view schematically illustrating a cover member and a lower cover member in another example.

[Fig. 22] Fig. 22 is a sectional view for explaining a condition in which a cover member and a lower cover member secured to the outer peripheral surface of a rim are joined to each other by calking in another example.

[Fig. 23] Fig. 23 is a sectional view schematically illustrating a condition in which a cover member and a lower cover member in another example are joined to each other by seam-welding so as to form a subsidiary air chamber member.

[Fig. 24] Fig. 24 is a sectional view for explaining a condition in which a subsidiary air chamber member formed by a cover member and a lower cover member in another example is secured on the outer peripheral surface of a rim.

[Description of Reference Numerals]

1: Vehicle Wheel, 2: Rim, 3: Subsidiary Air Chamber, 4: Outer Peripheral Surface of Rim, 5: Communication Hole, 6: Disc, 8: Seal Member, 9: Communication Hole, 10: Joint Part, 11: Stepped Part, 13: Cover member, 14: Bottom Plate Member, 15: Plastic Flow Zone: 16: Lug Part, 17: Fold Back Part, 19: Axial Direction of Wheel, 20: Circumferential Direction of Wheel, 21: Radial Direction of Wheel, 30: Rotary body, 31: Rotating Direction of Rotary body, 33: Protrusion, 34: Ridge, 35: Tip portion of Rotary body, 36: Axis of Rotary body, 40: Stopper, 41: Seal Member, 42: End Part of Cover Member, 51: Vehicle Wheel, 52: Subsidiary Air Chamber Member, 53: Cover Member, 54: Lower Cover Member, 56: Lug Part, 58: Joint Part, 60: Stepped Part, 61: Seam Welding Jig, 62: Seam Welding Jig [Best Mode for Carrying out the Invention]

The vehicle wheel according to the present invention incorporates subsidiary air chambers on the outer peripheral surface of the rim thereof, each of the subsidiary air chambers being formed at least in part by a cover member which ensures at the peripheral part air-tightness so as to form a subsidiary air chamber having air-tightness.

In the vehicle wheel according to the present invention, a plurality of subsidiary air chambers are preferably formed on the outer peripheral surface of the rim.

In the vehicle wheel according to the present invention, the cover member preferably has a lug part at least around the part of the periphery, and the lug part and the outer peripheral surface of the rim are joined to each other in an airtight manner so as to form a subsidiary air chamber having air-tightness on the outer peripheral surface of the rim.

In the vehicle wheel according to the present invention, a seal member is preferably interposed between the cover member and the outer peripheral surface of the rim.

In the vehicle wheel according to the present invention, the cover member and the outer peripheral surface of the rim are superimposed with each other through the seal member interposed therebetween in an airtight manner, and are then joined to each other in a joint part where the cover member and the outer peripheral surface of the rim are made into contact with each other so as to form a subsidiary air chamber having air-tightness on the outer peripheral surface of the rim.

In the vehicle wheel according to the present invention, the cover member preferably has a lug part at least around the part of the periphery, and a stepped part extended over the outer periphery along the inside of the cover member, and the cover member and the outer peripheral surface of the rim are superimposed with each other through a seal member made of an elastic material and interposed therebetween in an air-tight manner and are then joined to each other in the joint part where the cover member and the outer peripheral surface of the rim are made into contact with each other so as to form a subsidiary air chamber having air-tightness.

In the vehicle wheel according to the present invention, a bottom plate member is preferably interposed between the cover member and the outer peripheral surface of the rim, and the cover member and the bottom plate member are joined to each other so as to form a subsidiary air chamber which is arranged on the outer peripheral surface of the rim.

In the vehicle wheel according to the present invention, the cover member preferably has a lug part at least around the part of the periphery, and the lug part of the cover member and the bottom plate member are joined to each other in an air-tight manner so as to form a subsidiary air chamber having air-tightness on the outer peripheral surface of the rim.

In the vehicle wheel according to the present invention, the cover member and the bottom plate member interposed between the cover member and the outer peripheral surface of the rim are superimposed with each other through a seal member made of an elastic material and interposed therebetween in an air-tight manner, and the cover member and the outer peripheral surface of the rim are joined to each other in a joint part where the cover member and the outer peripheral surface of the rim are made into contact with each other so as to form a subsidiary air chamber having air-tightness on the outer peripheral surface of the rim.

In the vehicle wheel according to the present invention, preferably, the cover member has a lug part at least around the part of the periphery and a stepped part extended over at the periphery along the inside of the cover member, and the cover member and the bottom plate member interposed between the cover member and the outer peripheral surface of the rim are superimposed with each other through the seal member made of an elastic material and interposed therebetween in an airtight manner, and thereafter the cover member and the outer peripheral surface of the rim are joined to each other in the joint part where the cover member and the outer peripheral surface of the rim are made into contact with each other so as to form a subsidiary air chamber having air-tightness.

In the vehicle wheel according to the present invention, the joint parts preferably include the lug part at least in part, and are located at opposite ends of the cover member in the circumferential direction of the wheel.

In the vehicle wheel according to the present invention, the joint part is preferably located at the intermediate position of the cover member in the axial direction of the wheel.

In the vehicle wheel according to the present invention, the joint part is preferably located at the intermediate position of the outer peripheral surface of the rim in the axial direction of the wheel.

In the vehicle wheel according to the present invention, preferably, the joint parts are located only at two positions which are located at opposite peripheral ends of the cover member.

In the vehicle wheel according to the present invention, there are preferably provided a recess which is formed in a plastic flow zone between the cover member and the outer peripheral surface of the rim, having a depth which is not less than the thickness of the cover member and having a circular sectional shape.

In the vehicle wheel according to the present invention, preferably, the subsidiary air chamber includes not less than two communication holes communicated with the outer surface of the wheel on the side.which wears a tire, so that the subsidiary air chamber is communicated with the main air chamber of the tire in order to effect resonant absorption.

In the method of manufacturing a vehicle wheel which annularly incorporates subsidiary chambers on the outer surface of the rim, according to the present invention, the cover member having a lug part at least around the part of the periphery, and the outer peripheral surface of the rim are preferably superimposed with each other through a seal member made of an elastic material and interposed therebetween in an airtight manner, and are thereafter joined to each other in a joint part where the lug part and the outer peripheral surface of the rim are made into contact with each other so as to form a subsidiary air chamber having air-tightness on the outer peripheral surface of the rim.

In the method of manufacturing a vehicle wheel, according to the present invention, the cover member having a lug part at least around the part of the periphery and a stepped part extended over the outer periphery along the inside of the cover member, and the outer peripheral surface of the rim are superimposed with each other through the seal member made of an elastic material and interposed therebetween inside of the stepper part in an airtight manner, and are thereafter joined to each other in the part where the lug part and the outer peripheral surface of the rim are made into contact with each other so as to form a subsidiary air chamber having air-tightness on the outer peripheral surface of the rim.

In the method of manufacturing a vehicle wheel in which subsidiary chambers are annularly incorporated on the outer peripheral surface of a rim, according to the present invention, the cover member having a lug part at least in part of its periphery, and the bottom plate member inter posed between the cover member and the outer peripheral surface of the rim are preferably superimposed with each other through a seal member made of an elastic material and interposed therebetween in an airtight manner, and are joined to each other in a joint part where the lug part and the outer peripheral surface of the rim are made into contact with each other so as to form a subsidiary air chamber having air-tightness on the outer peripheral surface of the rim.

In the method of manufacturing a vehicle wheel which annularly incorporates subsidiary air chambers on the peripheral surface of a rim, according to the present invention, the cover member having a lug part at least around the part of the periphery and a stepped part extended over the outer periphery along the inside of the cover member, and the bottom plate member interposed between the cover member and the outer peripheral surface of the rim are superimposed with each other through a seal member made of an elastic member and interposed therebetween inside of the stepper part in an airtight manner, and are joined to each other in the part where the lug part and the outer peripheral surface of the rim are made into contact with each other so as to form a subsidiary air chamber having air-tightness on the outer peripheral surface of the rim.

In the method of manufacturing a vehicle wheel according to the present invention, the joint parts preferably include the lug part at least in part, and are located at opposite ends of the cover member in the circumferential direction of the wheel.

In the method of manufacturing a vehicle according to the present invention, the joint part is preferably located at the intermediate position of the cover member in the axial direction of the wheel.

In the method of manufacturing a vehicle according to the present invention, the joint part is preferably located at the intermediate position of the outer peripheral surface of the rim in the axial direction of the wheel.

In the method of manufacturing a vehicle according to the present invention, the joint parts are located only at two positions which are located at peripherally opposite ends of the cover member.

In the method of manufacturing a vehicle wheel according to the present invention, preferably, the joining is carried out in such a manner that with the use of a joint jig having a substantially columnar rotary body formed at the tip portion with a protrusion projected in the axial direction and an annular ridge around the protrusion, the rotary body on rotation is pressed against the cover member in a joint part so as to generate a frictional heat with which a plastic flow zone is formed between the cover member and the outer peripheral surface of the rim in the joint part, then the rotary body is pulled out along the axis after the plastic flow zone is stirred by the protrusion and the ridge, so as to cool and solidify the plastic flow zone.

The present invention will be hereinbelow detailed in the form of embodiments of the present inventions with reference to the accompanying drawings. It is noted that the present invention should not be limited to these embodiments, but the present invention can be variously changed, modified and improved by those skilled in the art within the technical scope of the present invention.

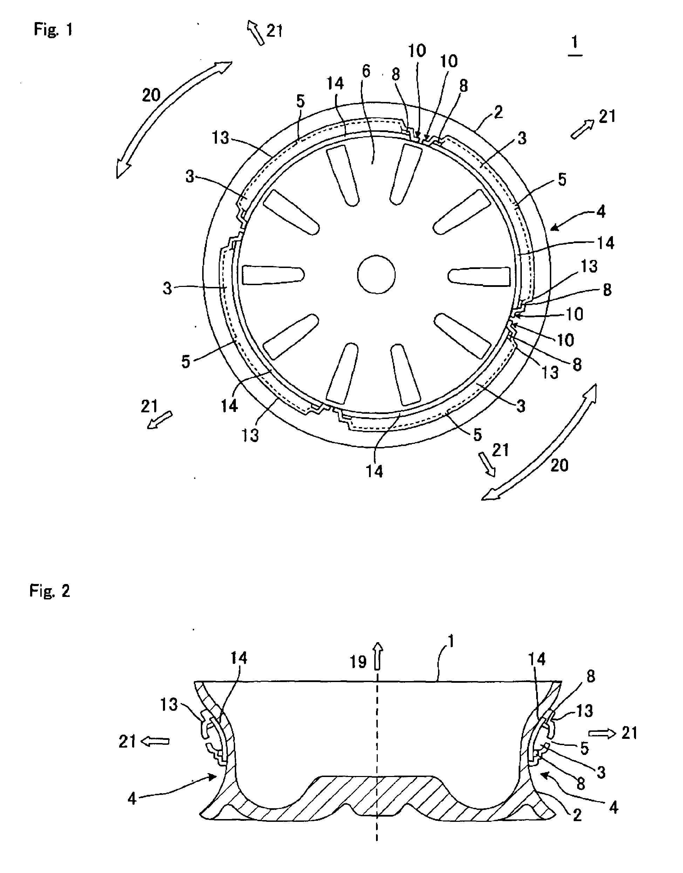

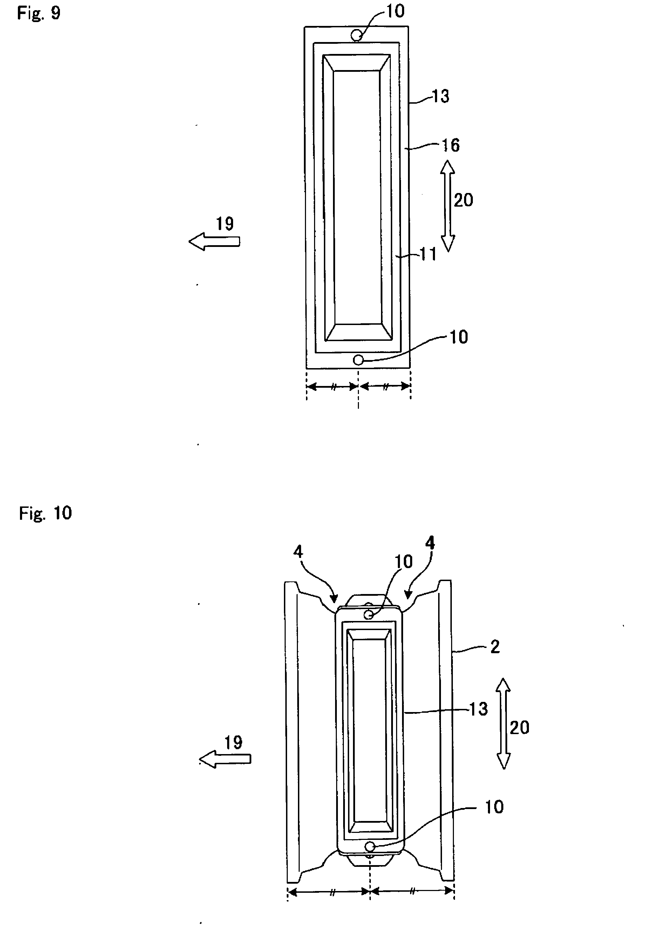

In the embodiments of the present invention, explanation will be made of a vehicle wheel 1 provided with a plurality of subsidiary air chambers 3 as shown in Fig. 1. However, only one subsidiary air chamber 3 may be formed and also a plurality of subsidiary air chambers is preferably formed. The position of a cover member 13 for forming the subsidiary chamber 3 in the axial direction10 of the wheel may be located striding the center of the vehicle wheel 1 in the axial direction 10 of the wheel 1, as shown in Fig. 10. At this stage, the side surface of the cover member 13 in the axial direction 10 of the wheel are arranged substantially in parallel with the radial direction 21 of the wheel, as shown in Fig. 1. At this time, in a rim outer peripheral surface 4, a surface substantially in parallel with the axial direction 10 of the wheel is utilized for forming the subsidiary air chamber 3. Thus, the subsidiary air chamber 3 can be formed with substantially no use of an inclined surface having an angle of not less than 10 deg. with respect to the axial direction 10 of the wheel in the rim outer peripheral surface 4, that is, the inclined surface extended from the peripheral bottom part of the rim to the hump part of the wheel 1.

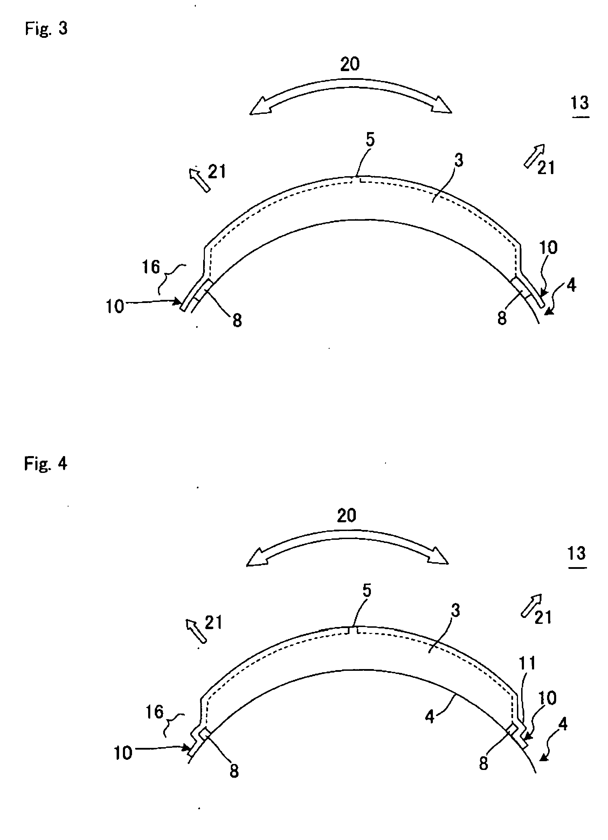

Figs. 1 and 2 are a schematically plan view and a schematically sectional view, respectively, schematically illustrating the vehicle wheel 1 manufactured by a manufacturing method according to the present invention. The radial direction 21, the axial direction 19 and circumferential direction 20 of the wheel are indicated by the arrows in the drawings. Figs. 3 to 6 are schematic sectional views for explaining a method of joining the cover member 13 and the rim outer peripheral surface 4 to each other in the several embodiments of the present invention. The vehicle wheel 1 according to the present invention is incorporated with the subsidiary air chambers 3 on the rim outer peripheral surface 4, that is, the cover members 13 as shown in Figs. 3 to 6 are secured to the rim outer peripheral surface 4 as shown in Figs. 1 and 2, so as to form a plurality of subsidiary air chambers 3.

In the present application the cover member 13 shown in Figs. 3 to 6 has different positions of seal members and the presence or absence of stepped parts and bottom plate members, and also Figs. 1 and 2 are used to show a typical example of drawings which shows the location of the subsidiary air chambers. The positions of the seal member, the presence of the stepped parts and the bottom plates will be specifically explained later. The space between cover members 13 may be present in view of the facility of the formation, but in view of ensuring the volume of the subsidiary air chamber, less space is preferable.

Detailed explanation will be hereinbelow made of the vehicle wheel according to the present invention and the method of manufacturing the vehicle wheel.

The cover members 13 are joined to the rim outer peripheral surface 4 in joint parts 10 as shown in schematic views of Figs. 3 to 6 which illustrate the several embodiments of the present invention, as viewed in the axial direction of the wheel, so as to form the subsidiary air chambers 3 which are communicated with the outside through communication holes 5. The cover members 13 have air-tightness with respect to the outside, except the communication holes 5. At this time, in order to ensure the air-tightness, seal members 8 made of an elastic material are used.

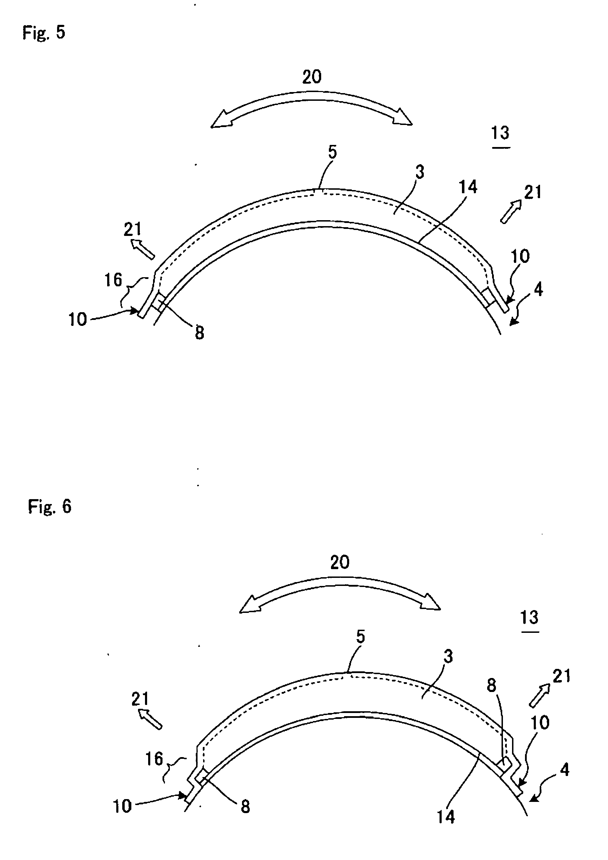

It is noted that the "air-tightness" in this specification gives such meaning that the subsidiary air chambers 3 are communicated with the main air chamber of a tire only through the communication holes 5 formed in the cover member 13. That is, the "air-tightness" in the specification gives such meaning that each cover member 13 has air-tightness, except the communication hole 5 formed in the cover member 13 in such a condition that the cover member and the rim outer peripheral surface 4 are joined to each other in the joint part 10 as shown in Fig. 3, and similarly, each subsidiary air chamber 3 is closed against the outside of the cover member, except the communication hole 5, as shown in Fig. 4. Further, gaps are formed in the joint parts 10 of the cover member 13 in Figs. 3 and 5, and in Figs. 4 and 6 gaps are formed between the cover member 13 and the rim outer peripheral surface 4, due to the thicknesses of the seal members 8 and the bottom plate member 14. However, the cover member can be joined to the rim outer peripheral surface 4 since the cover member 13 is pressed thereto actually.

Each cover member 13 in the several embodiments shown in Figs. 3 to 6 is joined to the rim outer peripheral surface 4 in the joint parts 10 located at opposite ends of the cover member 13 in the circumferential direction 20 of the wheel. At this time, the joint parts 10 are preferably located at the center of the cover member 13 in the axial direction of the wheel as shown in Fig. 9. Further, similarly, as shown in Figs. 3 to 6, the joint parts 10 are preferably located at the center of the rim outer peripheral surface in the axial direction of the wheel, as shown in Fig. 10.

As shown in Fig. 3, the cover member 13 having a lug part 16 extended over the entire periphery and the rim outer peripheral surface 4 are superimposed with each other through a seal member 8 made of an elastic material and interposed therebetween in an air-tight manner, and thereafter, are jointed to each other in the joint parts 10 where the lug part 16 and the rim outer peripheral surface 4 are made into contact with each other so as to form a subsidiary air chamber 3 having air-tightness on the outer peripheral surface 4 of the rim of the vehicle wheel.

As shown in Fig. 4, the cover member 13 having a lug part 16 extended over the entire periphery and a stepped part extended over the entire periphery along the inside of the lug part 16, and the rim outer peripheral surface 4 are superimposed with each other through the seal member 8 made of an elastic material and interposed therebetween in an air-tight manner inside of the stepped part 11, and thereafter, are jointed to each other in the joint parts 10 where the lug part 16 and the rim outer peripheral surface 4 are made into contact with each other so as to form a subsidiary air chamber 3 having air-tightness on the outer peripheral surface 4 of the rim of the vehicle wheel.

As shown in Fig. 5, the cover member 13 having a lug part 16 extended over the entire periphery and a bottom plate member 14 are superimposed with each other through the seal member 8 made of an elastic member and interposed therebetween in an air-tight manner, and thereafter, are jointed to each other in the joint parts 10 where the lug part 16 and the rim outer peripheral surface 4 are made into contact with each other so as to form a subsidiary air chamber 3 having air-tightness on the outer peripheral surface 4 of the rim of the vehicle wheel.

As shown in Fig. 6, the cover member 13 having a lug part 16 extended over the entire periphery and a stepped part 11 extended over its entire periphery along the inside of the lug part 16, and a bottom plate member 14 are superimposed with each other through the seal member 8 made of an elastic member and interposed therebetween in an air-tight manner inside of the stepped part 11 and thereafter, are jointed to each other in the joint parts 10 where the lug part 16 and the rim outer peripheral surface 4 are made into contact with each other so as to form a subsidiary air chamber 3 having air-tightness on the outer peripheral surface 4 of the rim of the vehicle wheel.

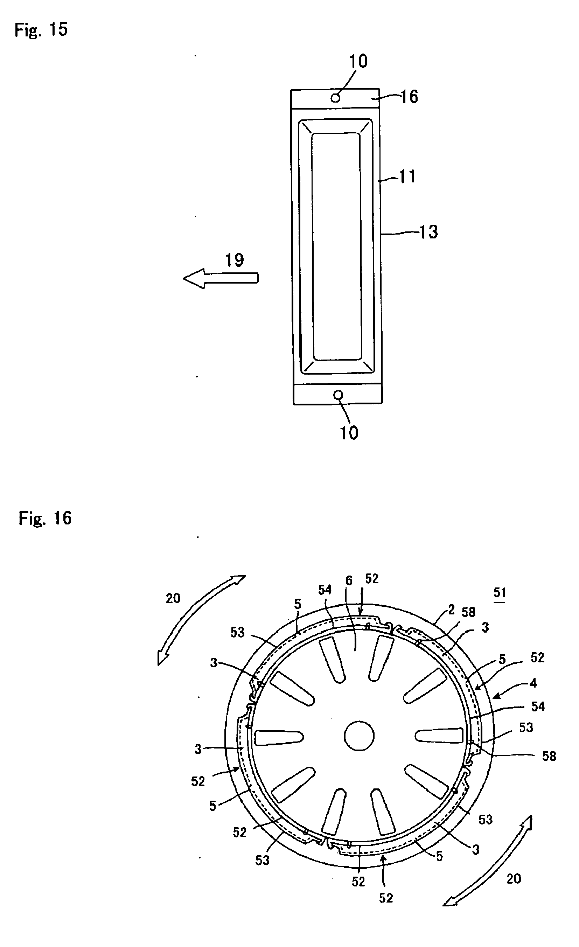

The stepped part 11 may have any shape which should not limited to a specific one, but it is sufficient if the stepped part can ensure air-tightness in the subsidiary air chamber 3, as shown in Figs. 9 and 15. As shown in Fig. 15, at the side surfaces of the cover member 13 in the axial direction 19 of the wheel, the lug part 16 serves as the stepped part 11 in the entirety, and in this case, the subsidiary air chamber 3 can be broadened in the width in the axial direction 19 of the wheel.

The lug part 16 which is formed being extended over the entire periphery of the cover member, has a width which can be suitably changed depending upon a size of the wheel, and which is preferably in a range from 8 to 12 mm. Further, the stepped part 11 are formed being extended over the entire periphery of the lug part 16 of the cover member 13, and accordingly, the stepped part is joined through the seal member 8 made of an elastic material so as to preferably ensure air-tightness for the subsidiary air chamber.

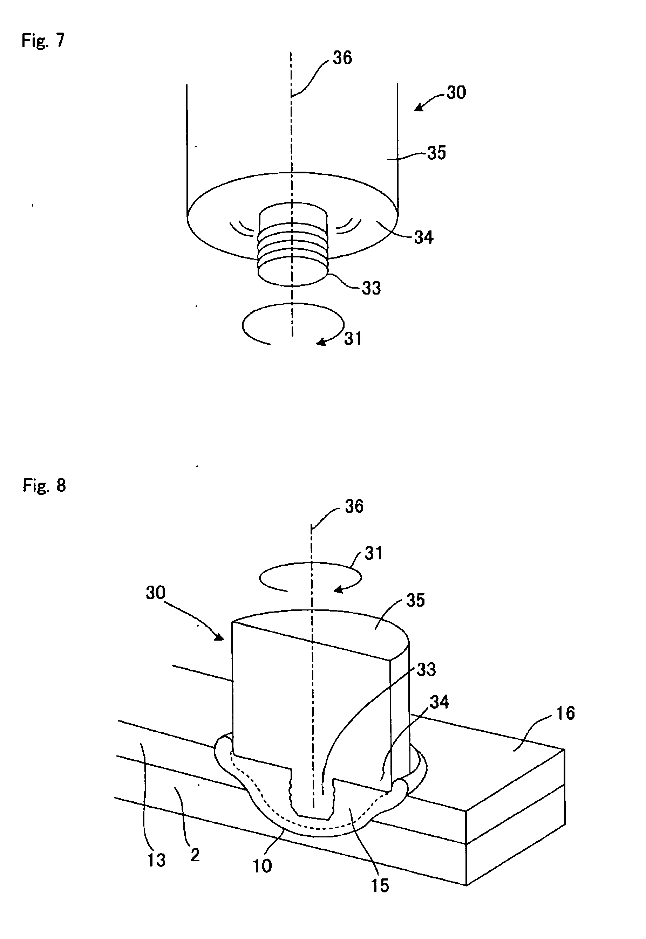

In the joining method in the joint part 10, which should not be in particular limited to a specific one, as shown in Fig. 7, with the use of a joint jig composed of a substantially columnar rotary body 30, a protrusion 33 projected from the tip portion 35 of the rotary body 30 along the axis 36 of the rotary body 30, and an annular ridge 34 around the projection 33, the rotary body 30 on rotation is pressed against the cover member 13 in the joint part 10 so as to generate a frictional heat with which a plastic flow zone 15 is formed between the cover member 13 and the rim outer peripheral surface 4 in the joint part, and the rotary body 30 is pulled out along the axis 36 after the plastic flow zone is stirred by the protrusion 33 and the ridge 35 so as to cool and solidify the plastic flow zone.

The joint jig will be explained in a more specific form. The diameter of the protrusion 33 of the rotary body used in the joint jig is in a range from 1.0 to 4.0 mm, and the diameter of ridge 34 preferably is in a range from 8.0 to 12 mm, which is preferably larger within the width of the lug part 16. Meanwhile, the height of the protrusion is preferably in a range from 0.8 to 4 mm. The rotational speed of the rotary body is in a range from 2,000 to 3,000 rpm, the pressing force with which the rotary body is pressed against the joint part 10 is in a range from 2,500 to 5,500 N, and the time of pressing is preferably in a range from 1.5 to 2.5 sec. The thickness of the rim outer peripheral surface 4 which should not be limited to a specific value, preferably is such that the rim has a thickness of 4 mm, the cover member 13 has a thickness of 2 mm, and the protrusion 33 is fitted into the rim outer peripheral surface 4 by a depth of 1 mm.

The joining method using the rotary jig can avoid problems such as a distortion caused by welding, deterioration of the property of the mother material and hot crack. Since this joining method is not the one which ensure air-tightness, the workability can be higher. Further, since the joining made in a solid phase so that the joining area and the heat quantity are small, it is possible to aim at saving the resources. Different from welding (about 600°C), no metal is melted. The joining is made at a temperature of about 400°C at maximum at which the plastic flow zone is obtained, and is thereafter allowed to be solidified after cooling. On the contrary, spot-welding (resistance welding) consumes a relatively high power. When aluminum alloy or the like having a satisfactory heat conduction is used as the cover member or the rim, a large current of several 10 thousands amperes is required. Even though a low current is fed for a long time, a resistance heat rapidly vanishes away, and accordingly, desired wielding cannot be made.

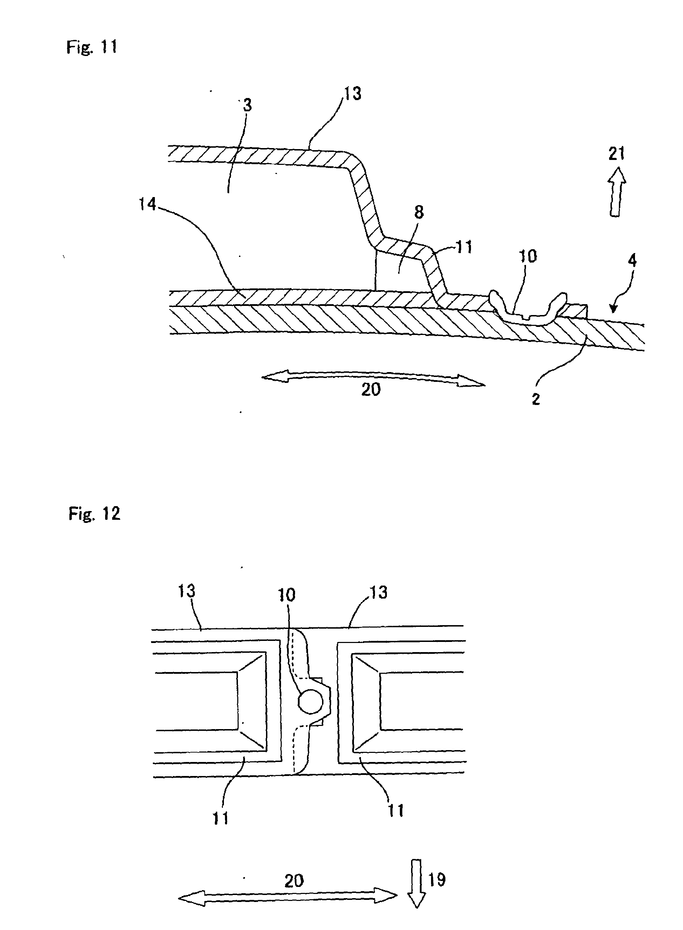

Referring to Fig. 11 which is sectional view illustrating the joint part with the use of the rotary jig, the joint part 10 is circular as viewed thereabove in the radial direction 21. Further, Fig. 12 shows such a case that the cover members 13 which are adjacent to each other are overlapped with each other, and accordingly, the adjacent cover members 13 are joined to each other only in one part in which they are overlapped with each other. At this time, the shape of the lug part 16 of the lower cover member has such a shape that it fit to the lug part of the upper side, and accordingly, the cover members can be prevented from coming off from each other.

Preferably, at least one of the intermediate points between the cover members 13 which are annularly adjacent to one other in the circumferential direction 24 of the wheel is aligned with the position of an air valve hole of the tire in the circumferential direction 24 of the wheel. With the alignment at this position, when a pneumatic pressure is measured through the valve hole, the measurement can be made without interference with the cover members since it is located at the intermediate point between the adjacent cover members 13.

When the joint part is joined, laser beam welding can be made. With the use of such a joining method, welding may be locally made by a high output power, and accordingly, several problems caused by the above-mentioned welding can be solved. In the case of using the laser beam welding, the welding is preferably carried out so as to depict a circle having a diameter from about 6.0 to 12 mm.

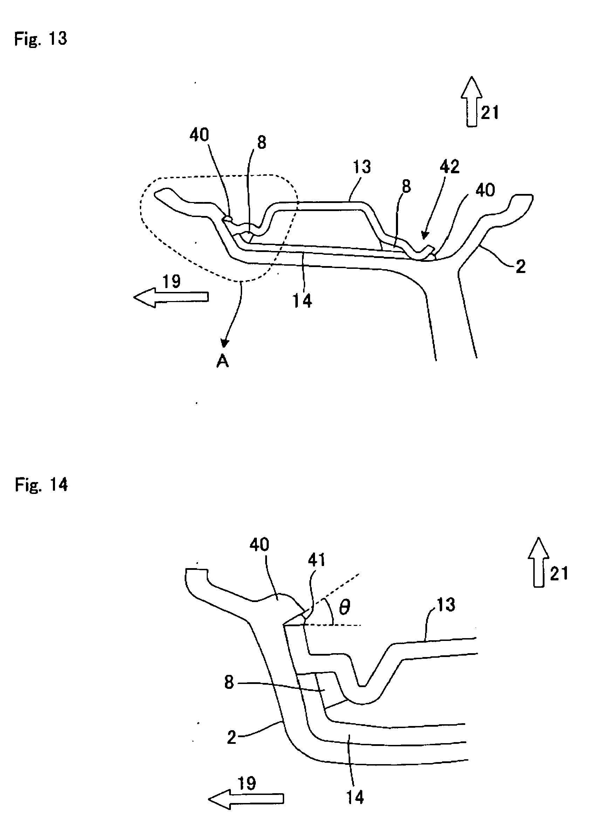

Fig. 13 is a view for explaining a mechanism for preventing the cover member 13 shown in Fig. 6 from shifting on the rim outer peripheral surface 4 in the axial direction 19 of the wheel and ensuring air-tightness. In order to prevent the cover member 13 from shifting in the axial direction 19 of the wheel due to vibration caused during revolution of the wheel, a stopper 40 is preferably provided as shown in Fig. 14 which is an enlarged view illustrating a part A defined by a broken line indicated in Fig. 13. The angle made by the stopper 40 with respect to an end surface of the cover member 13 is preferably be not greater than 90 deg. Since the stopper 40 has such a configuration that it presses the cover member 13 from radially thereabove, the cover member 13 can be positioned and accordingly, not only the cover member 13 can be prevented from coming off during the use but also the workability can be enhanced. Further, in order to fill the gap between the stopper 40 and the cover member 13, the seal member 40 is preferably used for the filling.

In order to facilitate the insertion of the seal member in the end part 42 of the cover member 13 on the side which is located t the opposite side of the stopper 40 in the axial direction 19 as shown in Fig.13, a gap is provided. And a seal member 40 is fitted in the gap to ensure air-tightness. With the provision of the stopper 40 and the gap in the end part 42 of the cover member, the facility of ensuring the workability and the air-tightness can be enhanced. The space between the cover members which are adjacent to each other in the circumferential direction 20 of the wheel may be presented in order to enhance the workability.

The materials from which the seal member 8 shown in Figs. 1 to 6 and the seal member 40 shown in Figs. 13 and 14 are made, will be exemplified below. Both seal members may be interchangeable with each other, and can be used selectively. For the seal member 8, there may be used a butyl rubber sheet, a butyl tape (which contains butyl rubber, calcium carbonate and an adhesive and simultaneously has simultaneously has contamination-resistance, heat-resistance, vulcanized rubber elasticity, plasticity of a patty-like seal member), nitrile rubber (NBR), hydrogenated nitrile rubber (HNBR), butyl rubber (IIR which has a moderate mechanical strength, and which is excellent in wear-resistance, cold-resistance and weather-resistance), fluororubber (which is excellent in mechanical characteristic, wear-resistance and weather-resistance), silicone rubber (with which a calking gun can be used) and the like.

It is not necessary that the number of the cover members 13 is equal to that of the subsidiary air chambers 3, and accordingly, two or more cover members 13 may be coupled with each other and fixed to the rim for covering the rim.

In addition to the vehicle wheel 1 as shown in Fig. 1, a vehicle wheel 51 as shown in Fig. 16 which is fabricated by calking or seam-welding will be hereinbelow explained as another embodiment of the present invention with the purpose of ensuring air-tightness for the cover member. Usually, it is in general difficult to form an internally hollow and closed structure such as the subsidiary air chamber in an airtight manner by superimposing two different members and then to secure the same to the rim outer peripheral surface with a sufficient mechanical strength by calking or seam-welding. That is, in the case of calking, the two members have to be clamped by a joint jig at the joint part, and in the case of seam-welding, the two members which are in general made of metal or the like, have to be clamped by jigs having a disc-like special shape and serving also as electrodes, on both sides thereof, and then to rotate the jig over the entire periphery of the joint part for carrying out resistance welding while pressing and electrical energization are made. Thus, the jigs require an extra space for clamping both members. This embodiment can eliminate this problem.

Namely, in the vehicle wheel in this embodiment, after a lower cover member is annularly jointed to the rim outer peripheral surface in joint parts of the lower cover member, preferably, the cover member and the lower cover member joined to the rim outer peripheral surface are superimposed with each other, and in this condition, the cover member and the lower cover member are joined to each other in an air-tight manner by calking or seam-welding in the part where they are superimposed with each other so as to form a subsidiary air chamber. At this time, the joint parts are preferably at least at two positions which are near the opposite ends of the cover member in the circumferential direction of the wheel.

Preferably, in the vehicle in this embodiment, in such a condition that the cover member and the lower cover member are superimposed with each other, they are joined in an air-tight manner by calking'or seam-welding in the part where they are superimposed with each other so as to form a subsidiary air chamber member, and thereafter, the cover member formed as the subsidiary air chamber member and the rim outer peripheral surface are joined to each other so as to fix the subsidiary air chamber member to the rim outer peripheral surface so as to form a subsidiary air chamber. At this time, the joint parts of the cover member are preferably located at least at two positions near the opposite ends of the cover member in the circumferential direction of the wheel.

Explanation will be hereinbelow made of another embodiment of the present invention with reference to the accompanying drawings, although the present invention should not be construed being limited to this embodiment. Various changes, modifications and improvements may be made by those skilled in the art without departing the technical scope of the present invention.

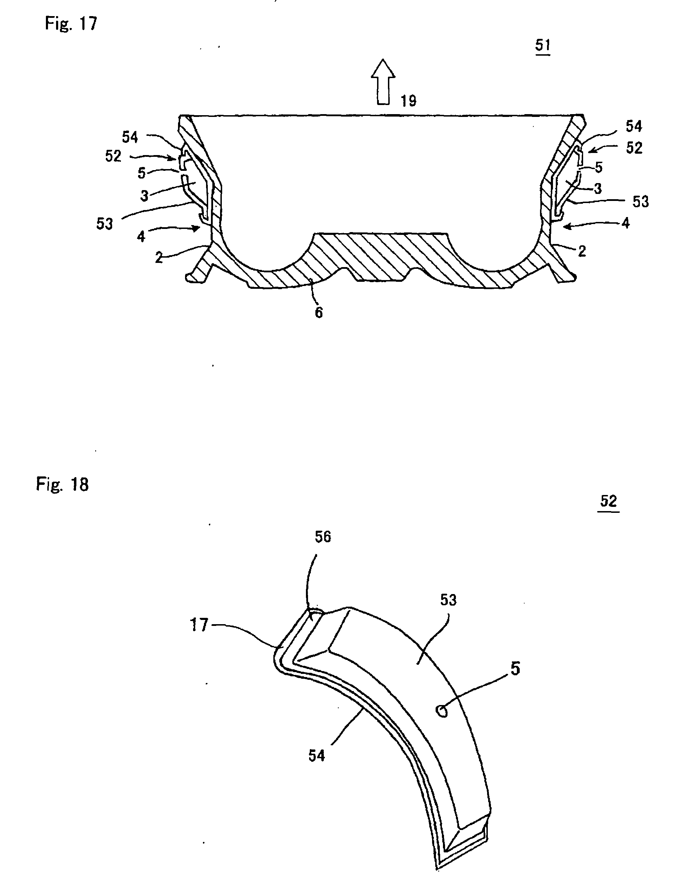

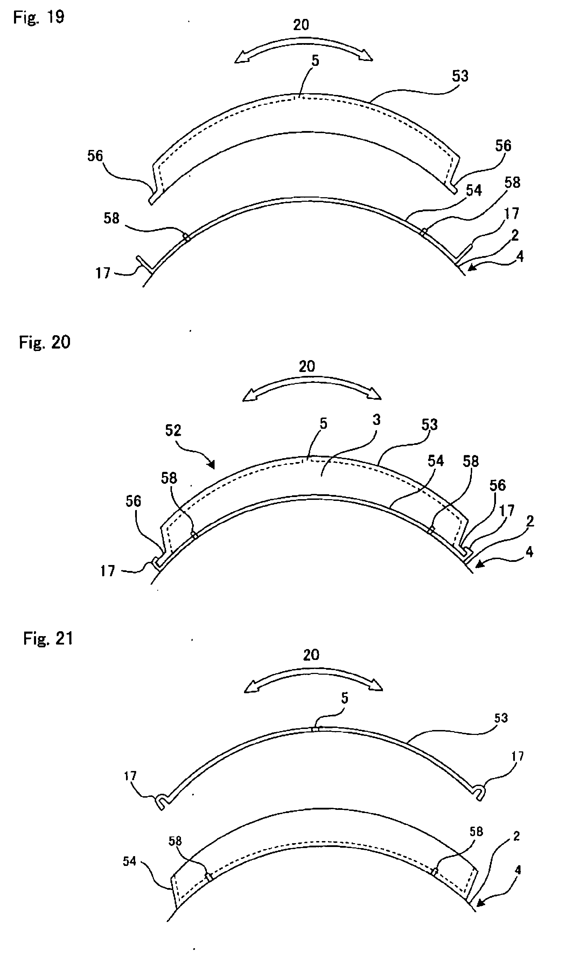

Fig. 16 is a plan view which schematically shows a vehicle wheel in the embodiment, Fig. 17 is a sectional view which schematically shows the vehicle wheel in the embodiment. As shown in Fig. 16 and 17, in the vehicle wheel 51 in the embodiment, a rim 2 is annularly formed at the outer peripheral end of a disc 6, having a plurality of subsidiary air chambers 3 formed on the outer peripheral surface 4 of the rim 2. As shown in Fig. 19, a lower cover member 54 is fixed on the rim outer peripheral surface, then, a cover member 53 is joined on to the lower cover member 54 fixed to the rim outer peripheral surface in an airtight manner so as to form a subsidiary air chamber member 52. The cover member 53 and the lower cover member 54 are joined to each other in an airtight manner so as to form the subsidiary air chamber member 52 on the rim outer peripheral surface 4 as shown in Fig. 18.

A plurality of the lower cover members 54 are secured to the rim outer peripheral surface 4 by laser beam welding or the like, each usually at the joint parts 18 which are located at two positions, and are annularly arranged in the circumferential direction 20 of the wheel as shown in Fig. 16. At this time, the securing method should not be limited to a specific one, but may be any of various ways in which the lower cover member can be secured to the rim outer peripheral surface. However, in order to solve the above-mentioned problems caused by the welding, preferably, the welding if necessary is carried out at two positions in local zones, which are, for example, around the center parts in the axial direction 19 of the wheel, near the opposite ends of the lower cover member.

It is noted here that the "circumferential direction of the wheel" is the circumferential direction 20 of the wheel indicated by the arrow in Fig. 16, and the "axial direction of the wheel" is the axial direction 19 of the wheel indicated by the arrow in Fig. 17.

Next, explanation will be made of a method of manufacturing a vehicle wheel according to this embodiment. At first, the cover member 53 incorporating a lug part 56 extended over its entire outer periphery, and the lower cover member 54, as shown in Fig. 19, are formed from a metal material such as aluminum. Next, as shown in Fig. 19, the lower cover member 54 is secured to the rim outer peripheral surface 4 by laser beam welding or the like. Further, as shown in Fig. 20, the lower cover member 54 and the cover member 53 superimposed with the former are joined by calking in an air-tight manner. It is noted here, in order to join the cover member 53 and the lower cover member 54 to each other by calking in an air-tight manner, as shown in fig. 19, that the cover member 53 is formed with the lug part 56 extended over its entire periphery, and the lower cover member 54 is preferably formed along its entire periphery with a fold-back part 17 which is folded inward so as to wrap the lug part 56 of the cover member 53 therein. Thus, the vehicle wheel according to the present invention can be manufactured. Further, the method of joining the cover member 53 and the lower cover member 54 to each other in an airtight manner should not be limited to a specific one, there may be preferably used calking, seam-welding, laser beam welding or the like.

It is noted here that the "seam-welding" is the so-called resistance welding in which two members are clamped between roller or disc type electrodes at a joint part and then pressed together while there are continuously energized and the electrodes are continuously rotated during the welding. Thus, it is necessary to clamp the two members in the joint part at opposite two positions, and thus, it is difficult to form a internally hollow structure such as the subsidiary air chamber, by mating the two members such as the cover member and the lower cover member with each other, and to secure the same to the rim outer peripheral surface at the same time. In view of this point, according to the present invention, the components constituting the subsidiary air chamber are fixed or welded in a predetermined process steps in order so as to materialize the formation of the subsidiary air chamber.

Further, in the formation of the subsidiary air chamber 3, there may be used a cover member 53 incorporated therewith a fold-back part 17 and a box-like lower cover member 54, as another example, as shown in Fig. 21. At this time, the cover member 53 and the lower cover member 54 can be formed in an airtight manner by a method similar to the formation of a packed can. This fold-back part 17 may be provided to either one of the cover member 53 and the lower cover member 54, and corresponding to the fold-back part 17, a lug part may be suitably provided to either one of the cover member 53 and the lower cover member 54.

In the above-mentioned embodiment, in the joint part 58, the lower cover member and the rim outer peripheral surface 4 are joined to each other, and accordingly, three members, that is, the cover member 53, the lower cover member 54 and the rim outer peripheral surface 4 are avoided from being joined to one another at the same time. This is in view of the result of consideration of the workability and the strength of the joint part 58, and accordingly, the sufficient joining with a satisfactory strength can be carried out while maintaining air-tightness.

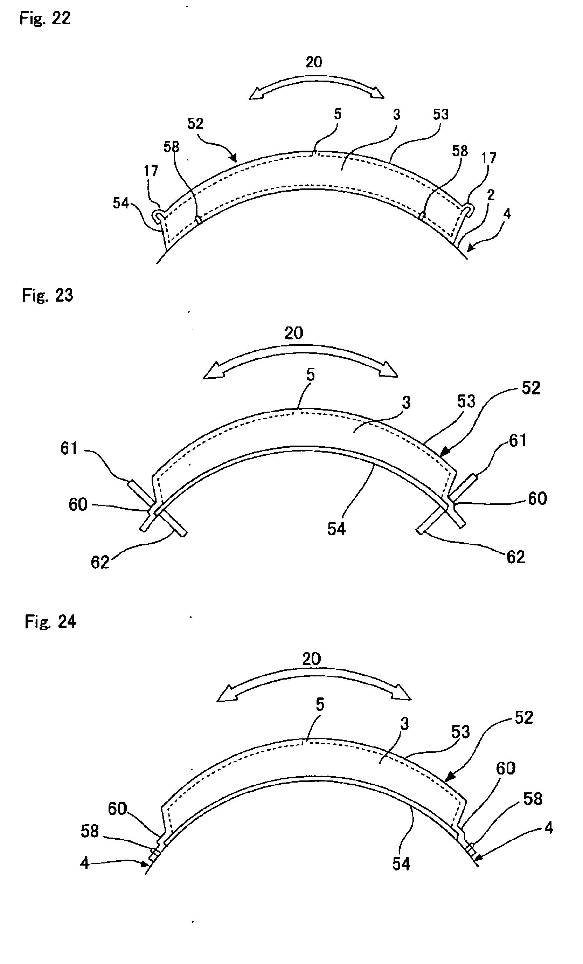

Further, the subsidiary air chamber member 52 may be formed with the use of members, as shown in Fig. 23, having shapes and positions which are different from those shown in the above-mentioned embodiments, as another example of the cover member 53 and the lower cover member 54. At this time, similar to the above-mentioned embodiment, three members, that is, the cover member 53, the lower cover member 54 and the rim outer peripheral surface 4 are avoided from being joined to one another at the same time. This is in view of the result of consideration of the workability and the strength of the joint part 58, and accordingly, the sufficient joining with a satisfactory strength can be carried out while maintaining air-tightness.

As shown in Fig. 23, the cover member 53 is formed with a stepped part 60 extended over the entire periphery, and is superimposed with and then secured to the lower cover member 54 in an air-tight manner so as to obtain a subsidiary air chamber member 52 incorporating therein a subsidiary air chamber 3. At this time, the measures for fixing the cover member 53 and the cover member 12 to each other in an airtight manner should not be limited to a specific one, but preferably, seam-welding is carried out along the entire periphery of the stepped part 60 with the use of, for example, seam welding jigs 61 and 62 as shown in Fig. 23.

Next, as shown in Fig. 24, the subsidiary air chamber member 52 composed of the cover member 53 and the lower cover member 54 is secured onto the rim outer peripheral surface 4. In the method of securing the subsidiary air chamber member 52, the subsidiary air chamber member 52 is secured onto the rim outer peripheral surface 4 in the joint parts which are usually at two positions, by, for example, laser beam welding, and is annularly arranged in the circumferential direction 20 of the wheel, as shown in Fig. 24. At this time, the fixing method should not be limited to a specific one, any of various manners in which the lower cover member can be secured onto the rim outer peripheral surface 4 may be used. However, in order to solve the above-mentioned problems caused by the welding, preferably, the welding if necessary is carried out at two positions in local zones, which are, for example, around the center parts in the axial direction 19 of the wheel, near the opposite ends of the lower cover member.

With the vehicle wheel in this embodiment, the material from which the wheel is made should not be limited a specific one, but, for example, a metal mainly composed of light alloy may be used, and more specifically, a metal mainly composed of aluminum alloy or magnesium alloy may be preferably used since a mechanical strength is necessary for a vehicle wheel and it should be lightweight.

Further, with the vehicle wheel in this embodiment, the material from which the subsidiary air chamber member 52 is made should not be limited to a specific one, but, for example, thermoplastic resin, photo-plastic resin, thermosetting resin, photo-setting resin, metal or the like may be preferably used since these materials allow the subsidiary air chamber member to have a required mechanical strength and to be lightweight. In view of the moldability, the thermo(photo)-plastic resin is highly preferable, and further, in view of thermal affection from the wheel after the molding (or mounting), the thermo (photo)-setting resin is also preferable. As to metal, metal mainly composed light alloy is preferably used, and more specifically, a metal mainly composed of aluminum alloy or magnesium alloy may be preferably used. In the case of using a thermoplastic resin as a material, it is preferable in view of easy molding.

As stated above, since the vehicle wheel incorporating a plurality of subsidiary air chambers on the rim outer peripheral surface can be formed, being composed of the rim wheel and the subsidiary air chamber members 52 which are formed separate from the wheel rim, it is extremely excellent in productivity, mechanical strength and balance, thereby it is possible to materialize stable running. Further, the subsidiary air chamber can be sealed without using a resin type sealant, and accordingly, no sorting collection is required, thereby it is extremely preferable in view of ecology.

The vehicle wheel 1, 51 according to the present invention is formed therein with communication holes 5 communicated respectively with the subsidiary air chambers 3. In order to obtain a satisfactory resonance absorption by the subsidiary air chambers 3 and the communication holes 5, preferably, the subsidiary air chambers 3 and the communication holes 5 should satisfy the following formula (1):

$$100 \leq \frac{C}{2\pi} \sqrt{\frac{S}{V(L+0.8\sqrt{(S/N)})}} \leq 500 \qquad \ldots (1)$$

where V is the total volume (cm$^3$) of the subsidiary air chambers 3, S is the total area (cm$^2$) of the communication holes 5, L is the length (cm) of the communication hole 5, N is the number of the communication holes 5 formed in each subsidiary air chamber 3, and C is a sound velocity (cm/sec).

It is noted that the subsidiary air chamber member 52 forming the subsidiary air chamber 3 is preferably formed therein with not less than one of the communication holes 5 at predetermined intervals so as to allow the tire main air chamber and the communication holes 5 to effect resonant absorption in cooperation. Preferably, not less than one of the communication holes 5 are formed in every one of the subsidiary air chamber 3 so as to further enhance the effect of the resonant absorption. Preferably, these communication holes 5 are in advance formed in the subsidiary air chamber forming members 52.

In Figs. 1, 2, 16 and 17, the subsidiary air chambers 3 and the communication holes 5 are formed so as to satisfy the above-mentioned formula (1), and accordingly, a resonant frequency can be set to be equal to the frequency of cavity resonant sound of a tire mounted on the vehicle wheel according to the present invention, thereby it is possible to reduce the cavity resonant sound of the tire. It is noted that in the vehicle wheel in the present embodiment, N in the above-mentioned formula (1) may be set to an average number of the communication holes 5 formed in one subsidiary air chamber 3 if two or more subsidiary air chambers 3 are formed and the numbers of the communication holes 5 formed respectively in the subsidiary air chambers 3 are different from one another.

Further, in the vehicle wheel in the embodiment, the total volume of the subsidiary air chambers 3 preferably corresponds to 2 to 25 % of the volume of the main air chamber of a tire actually mounted on the vehicle wheel, and more preferably corresponds to 3 to 15 % thereof. If the total volume of the subsidiary air chambers is not greater than 2 % thereof, both improved effect of drive comfortability and effect of resonant absorption during running would be lowered, but if it exceeds 25 %, the spring constant for low frequency waves would be lowered in the case of carrying out the above-mentioned resonant absorption, possibly resulting in lowering of damping function.

[Industrial Applicability]

With the method of manufacturing a vehicle wheel according to the present invention, a vehicle wheel can be conveniently and precisely manufactured with satisfactory workability, and further, the thus manufactured vehicle wheel is excellent in mechanical strength, and can materialize stable running. Thus, the present invention can offer merits which are extremely industrially effective for methods of manufacturing vehicle wheels.

**Claims**

1. A vehicle wheel having a rim formed at an outer peripheral surface with subsidiary air chambers each of which is defined at least in part by a cover member having a peripheral part which ensures air-tightness so that the subsidiary air chamber has air-tightness.

**2.** The vehicle wheel as set forth in claim 1, wherein a plurality of the subsidiary air chambers are provided on the outer peripheral surface of the rim.

**3.** The vehicle wheel as set forth in claim 1 or 2, wherein the cover member has a lug part at least around the part, and the lug part of the cover member is joined to the outer peripheral surface of the rim in an air-tight manner in order to form a subsidiary air chamber having air-tightness on the outer peripheral surface of the rim.

**4.** The vehicle wheel as set forth in claims 1 or 2, wherein a seal member is interposed between the outer peripheral surface of the rim and the cover member.

**5.** The vehicle wheel as set forth in claim 3, wherein the cover member and the outer peripheral surface of the rim are superimposed with each other through a seal member made of an elastic material in an air-tight manner and interposed therebetween, and the cover member and the outer peripheral surface of the rim are joined at a joint part where the cover member and the outer peripheral surface of the rim are made into contact with each other so as to form a subsidiary air chamber having air-tightness on the outer peripheral surface of the rim.

**6.** The vehicle wheel as set forth in claim 5, wherein the cover member has a lug part at least around a part of the periphery, and a stepped part extended over the entire periphery of the cover member along the inside thereof, and the cover member and the outer peripheral surface of the rim are superimposed with each other through a seal member made of an elastic material in an air-tight manner and interposed therebetween, and are thereafter joined to each other in a joint part where the cover member and the outer peripheral surface of the rim are made into contact with each other so as to form the subsidiary air chamber having air-tightness.

**7.** The vehicle wheel as set forth in any one of claims 1 to 6, wherein

a bottom plate member is interposed between the cover member and the outer peripheral surface of the rim, and the cover member and the bottom member are joined to each other so as to form the subsidiary air chamber which is arranged on the outer peripheral surface of the rim.

**8.** The vehicle wheel as set forth in claim 7, wherein

the cover member has a lug part at least around a part of the periphery, and the lug part of the cover member and the bottom plate member are joined with each other in an air-tight manner so as form the subsidiary chamber having air-tightness on the outer peripheral surface of the rim.

**9.** The vehicle wheel as set forth in claim 8, wherein the cover member and the bottom plate member interposed between the cover member and the outer peripheral surface of the rim are superposed with each other through a seal member made of an elastic member and interposed therebetween, and thereafter the cover member and the outer peripheral surface of the rim are joined to each other in a joint part where the cover member and the outer peripheral surface of the rim are made into contact with each other so as to form a subsidiary air chamber having air-tightness.

**10.** The vehicle wheel as set forth in claim 9, wherein

the cover member has a lug part at least around a part of the periphery, and a stepped part extended over the entire periphery thereof along the inside of the cover member, and the cover member and the bottom plate member interposed between the cover member and the outer peripheral surface of the rim are superposed with each other in an airtight manner, through a seal member made of an elastic material and interposed therebetween, and then, the cover member and the outer peripheral surface of the rim are joined to each other in a joint part where the cover member and the outer peripheral surface of the rim are made into contact with each other so as to form a subsidiary air chamber having air-tightness.

**11.** The vehicle wheel as set forth in any one of claims 5, 6, 9 and 10, wherein the joint parts include at least a part of the lug part, and are located at each of opposite ends of the cover member in the circumferential direction of the wheel.

**12.** The vehicle wheel as set forth in any one of claims 5, 6 and 9 to 11, wherein the joint part is located at an intermediate position of the cover member in the axial direction of the wheel.

**13.** The vehicle wheel as set forth in any one of claims 5, 6 and 9 to 12, wherein the joint part is located at the intermediate position of the outer peripheral surface of the rim in the axial direction of the wheel.

**14.** The vehicle wheel as set forth in any one of claims 5, 6 and 9 to 13, wherein the joint parts are located only at two positions which are at peripherally opposite ends of the cover member.

**15.** The vehicle wheel as set forth in any one of claims 5, 6 and 9 to 14, wherein the joint part is formed in a plastic flow zone between the cover member and the outer peripheral surface of the rim, and has a circular sectional shape recess having a depth which is not less than the thickness of the cover member.

**16.** The vehicle wheel as set forth in claim 1 or 2, wherein,

after a lower cover member is annularly joined to the outer peripheral surface of the rim in a joint part of the lower cover member,
a cover member and the lower cover member joined to the outer peripheral surface of the rim are superimposed with each other, and
thereafter, the cover member and the lower cover member are joined with each other in an air-tight manner at the superimposed position by calking or seam-welding so as to form a subsidiary air chamber.

**17.** The vehicle wheel as set forth in claim 16, wherein joint parts of the lower cover member are located at least at two positions which are near the opposite ends of the lower member in the circumferential direction of the wheel.

**18.** The vehicle wheel as set in claim 1 or 2, wherein

a cover member and a lower cover member which have been superimposed to each other, are joined to each other in an air-tight manner at superposed positions by calking or seam-welding so as to form a subsidiary air chamber member, and
thereafter, the cover member formed as the subsidiary air chamber member is joined to the outer peripheral surface of the rim in a joint part of the cover member so as to secure the subsidiary air chamber member onto the outer peripheral surface of the rim in order to form a subsidiary air chamber.

**19.** The vehicle wheel as set forth in claim 18, wherein the joint parts of the cover member are located at least at two positions which are near the opposite ends of the cover member in the circumferential direction of the wheel.

**20.** The vehicle wheel as set forth in any one of claims 1 to 19, wherein the subsidiary air chamber is formed therein with not less than one of communication holes which are communicated with the outer surface on the tire wearing side, and accordingly, the tire main air chamber and the subsidiary air chamber cooperate with each other through the communication holes so as to enable resonant absorption.

**21.** A method of manufacturing a vehicle wheel annularly incorporating subsidiary air chambers on the outer peripheral surface of a rim, wherein

a cover member having a lug part at least around a part of the periphery and the outer peripheral surface of the rim are superimposed with each other through a seal member made of an elastic material and interposed therebetween in an airtight manner, and thereafter are joined to each other in a joint part where the lug part and the outer peripheral surface of the rim are made into contact with each other so as to form the subsidiary air chamber having air-tightness on the outer peripheral surface of the rim .

**22.** The method of manufacturing a vehicle wheel as set forth in claim 21, wherein

the cover member has a lug part at least around a part the periphery, and a stepped part extended over the entire periphery along the inside of the cover member, and the cover member and the outer peripheral surface of the rim are superimposed with each other through the seal member made of an elastic material and interposed therebetween in an airtight manner, inside of the stepped part, and thereafter, are joined to each other in a joint part where the lug part and the outer peripheral surface of the rim are made into.contact with each other so as to form the subsidiary air chamber having air-tightness on the outer peripheral surface of the rim.

**23.** The method of manufacturing a vehicle wheel annularly incorporating subsidiary air chambers on the outer peripheral surface of a rim, wherein

a cover member having a lug part at least around the part of the periphery and a bottom plate member interposed between the cover member and the outer peripheral surface of the rim are superimposed with each other through a seal member made of an elastic material and interposed therebetween in an airtight manner, and are then joined to each other in a joint part where the lug part and the outer peripheral surface of the rim are made into contact with each other so as to form a subsidiary air chamber having air-tightness on the outer peripheral surface of the rim.

**24.** The method of manufacturing a wheel as set forth in claim 23, wherein

the cover member has a lug part at least around the part of the periphery and a stepped part extended over the entire periphery along the inside of the cover member, and
the cover member and the bottom plate member interposed between the cover member and the outer peripheral surface of the rim are superimposed with each other through the intermediary of the seal member made of an elastic material and interposed therebetween in an airtight manner, inside of the stepped part, and are then joined to each other in a joint part where the lug part and the outer peripheral surface of the rim are made into contact with each other so as to form a subsidiary air chamber having air-tightness on the outer peripheral surface of the rim.

**25.** The method of manufacturing a vehicle wheel as set forth in any of claims 21 to 24, wherein the joint parts include at least a part of the lug part, and are located at opposite ends of the cover member in the circumferential direction of the wheel.

**26.** The method of manufacturing a vehicle wheel as set forth in any one of claims 21 to 25, wherein the joint part is located at the intermediate position of the cover member in the axial direction of the wheel.

**27.**  The method of manufacturing a vehicle wheel as set forth in any one of claims 21 to 26, wherein the joint part is located at the intermediate position of the outer periphery of the rim in the axial direction of the wheel.

**28.** The method of manufacturing a vehicle wheel as set forth in any one of claims 21 to 27, wherein the joint parts are located only at two positions which are at circumferential opposite ends of the cover member.

**29.** The method of manufacturing a vehicle wheel as set forth in any one of claims 21 to 28, wherein the joining is carried out with the use of a joint tool composed of a substantially columnar rotary body having at a tip portion a protrusion projected along the axis of the rotary body and an annular ridge around the protrusion, in such a manner that the rotary body on rotation is pressed against the cover member so as to generate a frictional heat with which a plastic flow zone is formed between the cover member and the outer peripheral surface of the rim in a joint part, the plastic flow zone being stirred by the protrusion and the ridge of the joint tool which is thereafter pulled out along the axis of the rotary body, and thereafter, the plastic flow zone is cooled so as to be solidified.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

**Fig. 15**

**Fig. 16**

Fig. 17

Fig. 18

Fig. 19

Fig. 20

Fig. 21

Fig. 22

Fig. 23

Fig. 24

**European Patent Office**

**EUROPEAN SEARCH REPORT**

Application Number

EP 08 25 0302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2006 273182 A (RINTEKKUSU KK) 12 October 2006 (2006-10-12) | 1,2,7,20 | INV. B60B21/02 |
| A | * abstract; figures 1-9 * | 18,19 | B60B21/12 B60C19/00 |
| X | JP 2002 234304 A (BRIDGESTONE CORP) 20 August 2002 (2002-08-20) * abstract; figures 1,3,4 * | 1,2 | |
| X | DE 11 2005 000174 T5 (YOKOHAMA RUBBER CO LTD [JP]) 4 January 2007 (2007-01-04) * abstract; figure 1 * | 1,2 | |
| X | DE 199 20 681 A1 (AUDI NSU AUTO UNION AG [DE]) 9 November 2000 (2000-11-09) * column 3, lines 5-29; figure 2 * | 1,2 | |
| X | DE 198 01 570 A1 (CONTINENTAL AG [DE]) 22 July 1999 (1999-07-22) * column 7, line 59 - column 8, line 18; figure 10 * | 1,2 | |

TECHNICAL FIELDS SEARCHED (IPC)

B60B
B60C

The present search report has been drawn up for all claims

| Place of search | Date of completion of the search | Examiner |
|---|---|---|
| Munich | 7 July 2008 | Bolte, Uwe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 25 0302

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2008

| Patent document cited in search report | | Publication date | Patent family member(s) | | Publication date |
|---|---|---|---|---|---|
| JP 2006273182 | A | 12-10-2006 | NONE | | |
| JP 2002234304 | A | 20-08-2002 | NONE | | |
| DE 112005000174 | T5 | 04-01-2007 | CN | 1910061 A | 07-02-2007 |
| | | | JP | 2005205934 A | 04-08-2005 |
| | | | WO | 2005068223 A1 | 28-07-2005 |
| DE 19920681 | A1 | 09-11-2000 | NONE | | |
| DE 19801570 | A1 | 22-07-1999 | NONE | | |

EPO FORM P0459

For more details about this annex : see Official Journal of the European Patent Office, No. 12/82

**EP 1 961 583 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002079802 A

- JP 2004291896 A